# EUROPÄISCHE PATENTSCHRIFT

(11) **EP 1 886 051 B1**
(45) Veröffentlichungstag und Bekanntmachung des Hinweises auf die Patenterteilung: **04.08.2010**
(21) Anmeldenummer: 06761924.7
(22) Anmeldetag: 22.05.2006
(51) Int. Cl.: F16K 11/044, E03C 1/02

(54) **SANITÄRARMATUR**
SANITARY FITTING
ROBINETTERIE SANITAIRE

(30) Priorität: 28.05.2005 DE 102005024555
(43) Veröffentlichungstag der Anmeldung: 13.02.2008
(60) Teilanmeldung: 09006518.6
(73) Patentinhaber: Hansa Metallwerke AG, 70567 Stuttgart (DE)
(72) Erfinder: ASSENMACHER, Bernd, 70597 Stuttgart (DE); FREY, Christof, 73084 Salach (DE)
(74) Vertreter: Ostertag, Ulrich
(86) Internationale Anmeldenummer: PCT/EP2006/004814
(87) Internationale Veröffentlichungsnummer: WO 2006/128605

(56) Entgegenhaltungen:
- DE-A1- 3 124 214
- DE-A1- 4 323 496
- DE-A1- 19 901 553
- US-A- 2 206 609
- US-A- 3 370 609
- US-A- 4 606 370
- US-A- 5 730 184

## Beschreibung

Die Erfindung betrifft eine Sanitärarmatur mit einem Gehäuse, das einen Warmwasserzulauf, einen Kaltwasserzulauf und zwei Mischwasserausgänge aufweist, mit einer in dem Gehäuse angeordneten Kartusche, die ein Mischventil für. Kalt- und Warmwasser aufweist, wobei zwischen den beiden Mischwasserausgangen ein Umstellventil angeordnet ist, das einen Doppelventilkegel umfaßt, welcher durch ziehen an einem Stellglied gegen die Kraft einer Rückstellfeder von einer ersten Stellung, in der er den ersten Mischwasserausgang freigibt, in eine zweite Stellung bewegbar ist, in der er den zweiten Mischwasserausgang freigibt und in der er unter dem Druck von durch den zweiten Mischwasserausgang strömenden Mischwassers gehalten wird, bis er nach Abstellen des Wasserzuflusses selbsttätig in die erste Stellung zurückkehrt.

Eine solche Sanitärarmatur wird beispielsweise in DE 2019877 beschrieben. Die Sanitärarmatur dient als Duscharmatur, bei der die Mischwasserausgänge mit einem freien Auslauf für die Wanne beziehungsweise mit einem Zulauf für eine Brause verbunden werden. Die Umschaltung von Wanne auf Brause erfolgt durch Ziehen an dem Stellglied. Nach Abstellen des Wasserzuflusses schaltet die Duscharmatur unter der Kraft der Rückstellfeder wieder auf den freien Auslauf der Wanne um, damit nicht unbeabsichtigt bei späterem Aufdrehen ein Wasserstrahl aus der Brause spritzen kann.

Die US 2 206 609 beschreibt ein Umschaltventil für eine Unterputz-Sanitärarmatur, Dieses weist in dem Ausführungsbeispiel der Figuren 3 und 5 einen Hebel auf, der über einen Bedienknopf nach unten gedrückt werden kann, worauf ein mit einer Stange gelenkig verbundenes Ende des Hebels nach unten bewegt wird und dabei die Stange und das daran befestigte Ventilelement mitnimmt, so dass der Wasserweg zur Brause geöffnet wird. Nach Beendigung des Wasserflusses wird der Hebel infolge der Schwerkrafteinwirkung auf eine Masse, die am gegenüber liegenden Ende des Hebels angebracht ist, wieder in die ursprüngliche Lage gebracht. Gerade bei höherwertigen Sanitärarmaturen wird aber eine solche Bedienung durch ziehen an einem Stellglied von vielen Benutzern als nicht komfortabel empfunden. Aufgabe der Erfindung ist es daher, eine Sanitärarmatur anzugeben, bei der eine Wanne/Brause-Umschaltung auf günstigere Weise vorgenommen werden kann.

Ein wippenartiges Betätigungsglied am Wannenauslauf einer Sanitärarmatur geht aus der DE 93 14 443 U1 hervor. Zur Betätigung der Wippe ist der Wannenauslauf an seiner Oberseite mit einer gummielastischen Membran ausgestattet. Dies wird ebenfalls nicht als hochwertig oder komfortabel empfunden. Für die aus der DE 297 13 238 U1 bekannte Sanitärarmatur trifft dies ebenfalls zu, bei welcher ein Fortsatz am Hebel eines Einhebelmischers vorgesehen ist, der einen zugknopf der Umstellvorrichtung betätigt.

Umstellvorrichtungen, die an den Auslauf von Mischbatterien anschließbar sind, sind im Stand der Technik ebenfalls bekannt, zum Beispiel aus der DE 2 125 762 A. Dort ist ein tellerförmiger Ventilschließkörper mittels einer Hohlspindel zwischen zwei ventilsitzen hin und her bewegbar. Die Betätigung des Ventilschließkörpers erfolgt über einen Flachhebel, welcher an einem Ende gabelförmig ausgebildet ist und dadurch die Hohlspindel nach oben drücken kann, wenn ein durch einen Druckknopf betätigter Stößel an einer schrägfläche des Flachhebels angreift und so das Gabelende nach oben verschwenkt. Hier sind erhebliche Reibungskräfte zu überwinden, worunter ebenfalls der Komfort leidet.

Eine weitere Umstellvorrichtung ist aus der DE 77 16 688 U bekannt geworden; hier wird ein Druck-Zugknopf als Bedienelement verwendet. Eine geometrische Umlenkung der Bedienkraft findet nicht statt. Ziehen wird jedoch, wie oben erwähnt, als unkomfortabel empfunden. De 19901553 A1 offenbart eine Sanitärarmatur gemäß dem Obergriff des Anspruchs 1.

Die Aufgabe wird gelöst durch eine Sanitärarmatur mit den Merkmalen des Anspruchs 1. Vorteilhafte Ausgestaltungen sind in den abhängigen Ansprüchen angegeben.

Erfindungsgemäß besitzt die Sanitärarmatur ein durch Drücken betätigbares Bedienelement, welches über einen Umlenkmechanismus derart mit dem Stellglied gekoppelt ist, dass dieses durch Drücken auf das Bedienelement gegen die Kraft der Rückstellfeder in die zweite Stellung bewegt wird. Dabei weist der Umlankmechanismus eine an dem Stellglied angreifende Wippe auf, an deren anderen Ende eine Schubstange gelenkig verbunden ist, die zu dem Bedienelement führt. Die Schubstange hat am ihrem zum Bedienelement weisenden Ende einen Kugelkopf, der in einer entsprechenden Kugelpfanne des Bedienelementes liegt.

Durch ein Bedienelement, welches durch Drücken anstatt durch ziehen betätigbar ist, wird dem Benutzer ein Gefühl höherer Wertigkeit und Komforts vermittelt. Außerdem wird durch den Umlenkmechanismus die ursprüngliche Geometrie der Sanitärarmatur erhalten, so dass keine grundlegende Umgestaltung des Umstellventils erforderlicht ist. Die Kombination von Kugelkopf und Kugelpfanne ermöglicht den Ausgleich eines Winkelversatzes zwischen Bedienelement und Schubstange und damit eine spannungsfreie und leichtgängige Betätigung.

Die erfindungsgemäße Sanitärarmatur kann vorteilhaft als Wandarmatur für Unterputzmontage ausgebildet werden. Sie weist dann eine Trägerplatte für eine schraubenlose Rosette auf, durch die das Bedienelement ragt.

Vorzugsweise ist das Bedienelement federbelastet so dass es kein spiel aufweist und nach Betätigung wieder in seine Ausgangslage zurückkehrt.

Bevorzugt dient, die Sanitärarmatur als Wanne-/Brausearmatur. Der erste Mischwasserausgang ist dabei zur Verbindung mit einem freien Auslauf für eine Wanne vorgesehen und der zweite Mischwasserausgang zur Verbindung mit einem Zufluß für eine Brause.

Im folgenden wird ein Ausführungsbeispiel der Erfindung anhand der Zeichnung näher erläutert. Es zeigt die einzige Figur einen Schnitt durch eine erfindungsgemäße Wanne-/Brausearmatur.

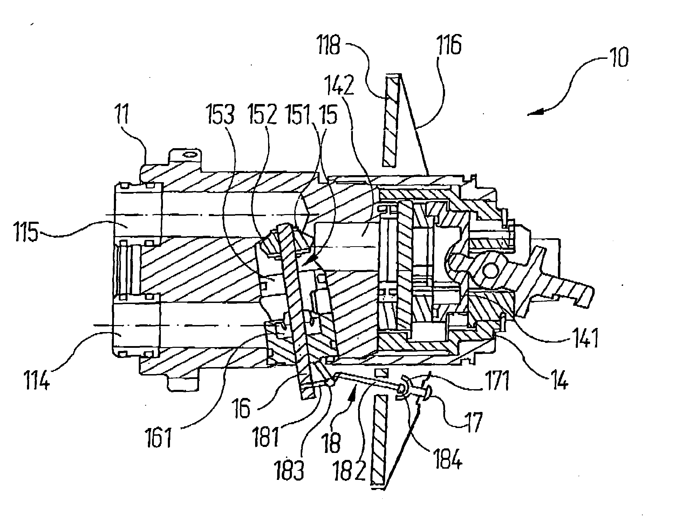

In der Figur ist eine Wanne-/Brausearmatur 10 mit Einhandmischen in Unterputzausführung dargestellt. Die Wanne-/Brausearmatur 10 weist ein Gehäuse 11 auf, in dem sich eine Kartusche 14 mit einem Mischventil 141 befindet, auf deren genaue Ausführung es hier im einzelnen nicht ankommt. Das Gehäuse 11 besitzt zwei Mischwasserausgänge 114, 115, die über ein Umstellventil 15 mit dem Mischventil 141 kommunizieren. Warm- und Kaltwasseranschlüsse sind in Figur 1 nicht sichtbar. Bei der Montage wird eine Trägerplatte 118 der Wanne-/Brausearmatur 10 genen die Wand verschraubt und eine schraubenlose Rosette 116 wird als Blende auf die Trägerplatte 118 gesteckt.

An den Mischwasserausgang 114 wird ein Wannenauslauf angeschlossen und an den Mischwasserausgang 115 der Zulauf einer Brause. Über das Umstellventil 15 wird der Wasserfluss von dem Wannenauslauf zu der Brause umgestellt. Dazu besitzt das Umstellventil 15 einen Doppelventilkegel 151, der mit zwei diametral gegenüberliegenden, gehäusefesten Ventilsitzen 152 und 153 zusammenwirkt. Liegt der Doppelventilkegel 151 an dem Ventilsitz 152 an, so fließt Mischwasser aus dem Mischventil 141 über den Mischwasserkanal 142 zum Mischwasserausgang 114 (Wanne). Im umgekehrten Fall, wenn der Doppelventilkegel 151 am Ventilsitz 153 anliegt, ist der Weg zum Mischwasserausgang 114 versperrt und es fließt Mischwasser aus dem Mischventil 141 über den Mischwasserkanal 142 zum Mischwasserausgang 115 (Brause).

Betätigt wird der Doppelventilkegel 151 durch ein Stellglied 16. Eine Rückstellfeder 161 hält den Doppelventilkegel 151 normalerweise am Anschlag des Ventilsitzes 152. Wird der Doppelventilkegel 151 jedoch durch Ziehen an dem Stellglied 16 gegen den Ventilsitz 153 verschoben, so hinterströmt Mischwasser den Doppelventilkegel 151 und der Wasserdruck hält den Doppelventilkegel 151 gegen die Federkraft der Rückstellfeder 161 am Ventilsitz 153. Erst nach Abstellen des Wasserzuflusses kehrt der Doppelventilkegel 151 durch die Federkraft der Rückstellfeder 161 selbsttätig in die Ausgangsstellung am Ventilsitz 152 zurück.

Ein Druckknopf 17 dient zur Betätigung des Stellgliedes 16 über einen Umlenkmechanismus 18. Der Umlenkmechanismus 18 weist eine Wippe 181 auf, die mit einem Schenkel an dem Stellglied 16 angreift. An dem anderen Schenkel der Wippe 181 ist eine Schubstange 182 gelenkig verbunden, die zu dem Druckknopf 17 führt. Die Wippe 181 ist um eine gehäusefeste Achse 183 schwenkbar gelagert. Die Schubstange 182 hat am ihrem zum Druckknopf 17 weisenden Ende einen Kugelkopf 184, der in einer entsprechenden Kugelpfanne 171 des Druckknopfs 17 liegt. Dadurch wird ein eventueller Winkelversatzes zwischen Schubstange 182 und Druckknopf 17 ausgeglichen.

Der Druckknopf 17 ist mit einem entsprechenden Gegenstück (nicht gezeigt), in dem der Druckknopf 17 und eine zugehörige Rückstellfeder (ebenfalls nicht gezeigt) gelagert sind, von hinten mit der Rosette 116 verschraubt.

Drückt ein Benutzer auf den Druckknopf 17 der Wanne-/Brausearmatur 10, so wird die Druckbewegung über die Schubstange 182 auf die Wippe 181 übertragen und verschwenkt so die Wippe 181 um die gehäusefeste Achse 183. Dabei wird über den entgegengesetzten Schenkel der Wippe 181 das Stellglied 16 aus dem Gehäuse 11 herausgezogen und bewegt den Doppelventilkegel 151 gegen den Ventilsitz 153, so dass Mischwassers aus dem Mischwasserausgang 115 zur Brause strömt. Ein Zurückschalten auf den Wannenauslauf erfolgt durch Abstellen des Wasserflusses.

## Patentansprüche

1. Sanitärarmatur mit einem Gehäuse (11), das einen
Warmwasserzulauf, einen Kaltwasserzulauf und zwei Mischwasserausgänge (114, 115) aufweist, mit einer in dem Gehäuse (11) angeordneten Kartusche (14), die ein Mischventil (141) für Kalt- und Warmwasser aufweist, wobei zwischen den beiden Mischwasserausgängen (114, 115) ein Umstellventil (15) angeordnet ist, das einen Doppelventilkegel (151) umfaßt, welcher durch Ziehen an einem Stellglied (16) gegen die Kraft einer Rückstellfeder (161) von einer ersten Stellung, in der er den ersten Mischwasserausgang (114) freigibt, in eine zweite Stellung bewegbar ist, in der er den zweiten Mischwasserausgang (115) freigibt und in der er unter dem Druck von durch den zweiten Mischwasserausgang (115) strömenden Mischwassers gehalten wird, bis er nach Abstellen des Wasserzuflusses selbsttätig in die erste Stellung zurückkehrt,
**gekennzeichnet durch**
ein **durch** Drücken betätigbares Bedienelement (17), welches über einen Umlenkmechanismus (18) derart mit dem Stellglied (16) gekoppelt ist, dass dieses **durch** Drücken auf das Bedienelement (17) gegen die Kraft der Rückstellfeder (161) in die zweite Stellung bewegt wird, wobei
der Umlenkmechanismus (18) eine mit einem Ende an dem Stellglied (16) angreifende wippe (181) umfaßt, mit deren anderem Ende eine Schubstange (182) gelenkig verbunden ist, die zu dem Bedienelement (17) führt, und
die Schubstange-(182) am ihrem zum Bedienelement (17) weisenden Ende einen Kugelkopf (184) aufweist, der in einer entsprechenden Kugelpfanne (171) des Bedienelementes (17) liegt.

2. Sanitärarmatur nach Anspruch 1, **dadurch gekennzeich net, dass** sie als Wandarmatur für Unterputzmontage
ausgebildet ist und eine Trägerplatte (118) für eine schraubenlose Rosette (116) aufweist, durch die das Bedienelement (17) ragt.

3. Sanitärarmatur nach einem der vorhergehenden Ansprü che, **dadurch gekennzeichnet, dass** das Bedienelement
(17) federbelastet ist.

4. Sanitärarmatur nach einem der vorhergehenden Ansprü che, **dadurch gekennzeichnet, dass** sie als Duscharmatur ausgebildet ist und der erste Mischwasserausgang (114) zur Verbindung mit einem Wannenauslauf vorgesehen ist und der zweite Mischwasserausgang (115) zur Verbindung mit einem Zufluß für eine Brause vorgesehen ist.

## Claims

1. Sanitary fitting having a housing (11), which has a hot-water intake , a cold-water intake and two mixed-water outlets (114, 115), having a cartridge (14), which is disposed in the housing (11) and has a mixing valve (141) for cold- and hot water, wherein disposed between the two mixed-water outlets (114, 115) is a changeover valve (15), which comprises a double cone valve (151), which as a result of pulling on an actuating member (16) is movable counter to the action of a restoring spring (161) from a first position, in which it releases the first mixed-water outlet (114), into a second position, in which it releases the second mixed-water outlet (115) and in which it is held under the pressure of mixed water flowing through the second mixed-water outlet (115) until, after the inflow of water has stopped, it returns automatically into the first position,
**characterized by**
an operating element (17), which is actuable by pressing and is coupled by a deflecting mechanism (18) in such a way to the actuating member (16) that as a result of pressing on the operating element (17) the actuating member (16) is moved into the second position counter to the action of the restoring spring (161) wherein
the deflecting mechanism (18) comprises a rocker (181), which acts by one end on the actuating member (16) and is hinge-connected by the other end to a push rod (182), which leads to the operating element (17), and
the push rod (182) on its end facing the operating element (18) has a spherical head (184), which lies in a corresponding ball cup (171) of the operating element (17).

2. Sanitary fitting according to claim 1, **characterized in that** it takes the form of a wall fitting for flush mounting and has a supporting plate (118) for a screwless bezel (116), through which the operating element (17) projects.

3. Sanitary fitting according to one of the preceding claims, **characterized in that** the operating element (17) is spring-loaded.

4. Sanitary fitting according to one of the preceding claims, **characterized in that** it takes the form of a shower fitting and the first mixed-water outlet (114) is intended for connection to a bath outlet and the second mixed-water outlet (115) is intended for connection to a supply for a shower.

## Revendications

1. Robinetterie sanitaire, avec un corps (11) qui présente une arrivée d'eau chaude, une arrivée d'eau froide et deux sorties d'eau mitigée (114, 115), avec une cartouche (14) qui est disposée dans le corps (11) et qui présente un mitigeur (141) pour l'eau froide et l'eau chaude, sachant qu'un distributeur à deux positions (15) est disposé entre les deux sorties d'eau mitigée (114, 115), distributeur qui comprend un cône de soupape double (151) qui, en tirant un organe d'actionnement (16) et contre la force d'un ressort de rappel (161), peut être déplacé d'une première position, dans laquelle il libère la première sortie d'eau mitigée (114), dans une deuxième position dans laquelle il libère la deuxième sortie d'eau mitigée (115), et dans laquelle il est maintenu par la pression de l'eau mitigée s'écoulant par la deuxième sortie d'eau mitigée (115), jusqu'à ce qu'il retourne automatiquement dans la première position lorsque l'afflux d'eau est coupé,
**caractérisée par** un élément de commande (17) qui peut être actionné par application d'une pression et qui est accouplé par l'intermédiaire d'un mécanisme de renvoi (18) à l'organe d'actionnement (16) de telle sorte que ce dernier est, en exerçant une pression sur l'élément de commande (17), déplacé dans la deuxième position contre la force du ressort de rappel (161),
sachant que le mécanisme de renvoi (18) comprend une bascule (181) agissant par une extrémité sur l'organe d'actionnement (16) et à l'autre extrémité de laquelle est reliée de manière articulée une tringle de poussée (182) qui mène à l'élément de commande (17), et que la tringle de poussée (182) présente, à son extrémité tournée vers l'élément de commande (17), une tête sphérique (184) qui repose dans une cuvette sphérique correspondante (171) de l'élément de commande (17).

2. Robinetterie sanitaire selon la revendication 1, **caractérisée en ce qu'**elle est conçue comme robinetterie murale pour montage encastré et elle présente une plaque porteuse (118) pour une rosette sans vis (116) à travers laquelle dépasse l'élément de commande (17).

3. Robinetterie sanitaire selon l'une des revendications précédentes, **caractérisée en ce que** l'élément de commande (17) est sollicité par ressort.

4. Robinetterie sanitaire selon l'une des revendications précédentes, **caractérisée en ce qu'**elle est conçue comme robinetterie de douche et la première sortie d'eau mitigée (114) est prévue pour le raccordement à une évacuation de bac à douche, tandis que la deuxième sortie d'eau mitigée (115) est prévue pour le raccordement à une alimentation pour une pomme de douche.
